# FASCICULE DE BREVET EUROPEEN

(11) **EP 0 556 142 B1**
(45) Date de publication et mention de la délivrance du brevet: **14.06.1995**
(21) Numéro de dépôt: 93440014.4
(22) Date de dépôt: 10.02.1993
(51) Int. Cl.: E04B 1/24, B64G 9/00

(54) **Elément d'assemblage**
Montageelement
Assembly element

(30) Priorité: 14.02.1992 FR 9201859
(43) Date de publication de la demande: 18.08.1993
(73) Titulaire: S.A. GUILLET, F-67127 Molsheim Cedex (FR)
(72) Inventeur: Guillet, Gilles, F-67380 Lingolsheim (FR)
(74) Mandataire: Littolff, Denis

(56) Documents cités:
- FR-A- 2 352 202
- GB-A- 1 388 855
- US-A- 3 250 401

## Description

La présente invention concerne un élément standardisé d'assemblage du type equipant les extrémités de tubulures d'angle de pièces en poutres triangulées destinées à être assemblées, ainsi que des pièces en poutres triangulées munies de tels éléments, et elle a trait également à la manière de positionner les éléments sur lesdites tubulures.

Cet élément d'assemblage est unique, et on le retrouve par conséquent à l'identique, quelle que soit l'extrémité de la pièce triangulée considérée.

Il s'agit d'un avantage déterminant par rapport aux systèmes actuellement disponibles, puisqu'on s'affranchit totalement des contraintes dues à l'utilisation de parties mâles et femelles, qui sont l'apanage des systèmes classiques à chapes utilisés jusqu'ici.

Lorsqu'on réalise des structures à l'aide de poutres triangulées, on dispose, outre des poutres linéaires, de plusieurs éléments de raccordement. Ces pièces de liaison ont notamment pour fonction de permettre un ou plusieurs changements de direction, le raccordement de plusieurs poutres, dans le plan ou en trois dimensions, ou encore la confluence de plusieurs poutres en un endroit.

Les pièces usuelles sont en forme de croix, en T, ou en L, en deux ou trois dimensions. Etant donné que les éléments linéaires comportent dans les configurations classiques une extrémité munie de parties femelles et une extrémité munie de parties mâles, il est actuellement nécessaire de prévoir à l'avance quel type de pièce de liaison sera à insérer à tel endroit de la structure complexe.

Selon le cas, en effet, une pièce en T devra comporter des parties mâles aux extrémités horizontales et une liaison femelle à l'extrémité verticale, ou l'inverse. Mais d'autres configurations sont également possibles : une liaison mâle et une liaison femelle aux extrémités horizontales, et soit l'une, soit l'autre en bas. Dans cette hypothèse d'une pièce en T, qui est l'une des plus simples et de surcroît considérée ici en deux dimensions seulement, on aboutit déjà à six possibilités.

Les structures triangulées comportant au surplus plusieurs tubes, chacun muni à ses deux extrémités de chapes de liaison, on peut multiplier les problèmes de raccordement à l'envie.

La conception d'une structure complexe faisant appel à de nombreux éléments triangulés n'en est pas facilitée. Il faut en effet prévoir dès l'étape de conception quelle pièce de raccordement doit être insérée aux différents endroits de liaison, en fonction des extrémités - mâles ou femelles - des poutres qui convergent en ces endroits.

C'est de cette difficulté qu'a voulu s'affranchir l'objet de la présente invention. La solution choisie est basée sur un élément d'assemblage unique et standard qui équipe toute les extrémités des pièces à assembler.

L'élément d'assemblage de l'invention doit par conséquent réunir les fonctionnalités des anciennes liaisons mâles et femelles. Une partie mâle est ainsi prévue pour s'adapter dans une partie femelle d'un élément exactement identique, mais orienté inversement, la réciproque étant bien entendu également vérifiée.

Au surplus, à l'instar des chapes complexes actuellement utilisées, l'élément de l'invention est doté d'un moyen de solidarisation avec son homologue de l'autre poutre, permettant de fixer les pièces en poutres triangulées entre elles.

Le brevet français référencé FR-A-2352202, lequel représente l'état de la technique correspondant au préambule de la revendication 1 annexée, décrit un dispositif destiné à assurer la liaison des éléments d'une charpente métallique qui s'apparente à celui de l'invention.

Il s'agit d'un système constitué par des brides d'éclissage placées à l'extrémité des éléments à assembler, de formes complémentaires et destinées à s'emboîter l'une dans l'autre au moment de l'éclissage.

Selon une configuration possible de ce dispositif, les brides de deux éléments fixés l'un à l'autre sont identiques, comprenant un premier volume de section rectangulaire et un second volume d'extrémité de section triangulaire surmonté d'un pion de centrage. Au niveau de la naissance du volume de section triangulaire, la surface résiduelle du premier volume comporte un percement destiné à coopérer avec le pion de centrage de l'élément homologue.

Cette configuration présente des éléments d'assemblage terminaux standardisés, dont le mode de fixation transversal fait appel à une clavette intermédiaire prenant place entre les deux bases des volumes à section triangulaire. Cette clavette est munie d'un corps d'allure prismatique d'où saillit une tige terminale filetée destinée à coopérer avec un écrou de serrage. Ladite tige émerge des éléments de charpente car elle n'est pas comprise dans le volume délimité par les éléments d'assemblage terminaux.

Pour schématiser, on peut dire que les volumes desdits éléments d'assemblage correspondent à un cube surmonté d'un trièdre dont la base du triangle de section est la médiane de la face du cube surmonté par ledit trièdre. De la sorte, il y a symétrie par rapport aux directions longitudinale et transversale au moment de l'assemblage. Les deux faces en regard des trièdres sont dotées d'évidements présentant la même symétrie.

La clavette comprend alors deux faces inclinées, convergentes, qui correspondent à deux parois de l'évidement précité, à raison d'une pour chaque élément d'assemblage. Cette convergence permet le serrage des deux éléments.

Cette conception est cependant assez complexe à mettre en oeuvre, notamment lorsque les liaisons sont nombreuses et que la rapidité de montage est déterminante.

En outre, la fabrication est onéreuse, car l'usinage de toutes les faces en vis-à-vis doit être précis afin que les clavettes de serrage puissent assurer leur fonction avec une efficacité optimale.

L'un des objectifs de la présente invention est par conséquent de proposer un système d'assemblage simple à mettre en oeuvre, avec un nombre minimal de composants, et simple à fabriquer dans le but de rendre la production particulièrement économique.

A ces effets, l'élément d'assemblage de la présente invention a une forme extérieure telle qu'elle peut s'ajuster au contact de son homologue identique de la pièce avec laquelle le raccordement s'effectue, lequel homologue se présente symétriquement par rapport à ses axes longitudinal et transversal, par l'intermédiaire de liaisons à tenon et mortaise, la mortaise étant pratiquée dans un premier volume d'allure prismatique susceptible d'être rapporté centré sur la tubulure d'angle et perpendiculairement à elle, et situé à la base d'un second volume d'allure prismatique perpendiculaire au premier et décalé par rapport à l'axe central de ladite tubulure, qui comporte à son extrémité le tenon et est muni d'un moyen de solidarisation avec son homologue symétrique, ledit second volume présentant une surface d'appui plane s'étendant transversalement par rapport au premier volume et agencée de telle façon par rapport à la mortaise et au tenon qu'elle vienne au contact d'une surface d'appui plane correspondante dudit homologue symétrique, de façon à réaliser un emboîtement partait.

Selon une possibilité, ledit moyen permettant la solidarisation consiste simplement en un alésage parfaitement centré dans ladite surface d'appui plane du second volume d'allure prismatique, et qui vient par conséquent exactement en regard du même alésage pratiqué dans son homologue. Il n'y a plus alors, pour les fixer, qu'à réaliser un boulonnage ou une liaison par goupille.

L'invention a également pour objet des pièces en poutres triangulées munies de tels éléments d'assemblage.

La condition nécessaire et suffisante pour que la liaison des différentes pièces triangulées munies de ces éléments d'assemblage puisse être réalisée est cependant que le positionnement desdits éléments d'assemblage obéisse à une règle stricte : il faut que la position des éléments de l'invention par rapport à la tubulure soit immuable.

En d'autres termes, quel que soit le nombre des extrémités de liaison, lorsqu'on suit un trajet symbolisé par une tubulure d'angle, les positions relatives de l'élément d'assemblage et de la tubulure sont toujours identiques. Cela peut également s'exprimer en disant que lorsqu'on passe en revue les extrémités d'un même trajet, selon une rotation d'axe perpendiculaire audit trajet, les pièces d'assemblage gardent une position constante.

Un tel agencement permet l'assemblage simple des différentes pièces, puisqu'alors chaque élément d'assemblage d'extrémité ne peut se trouver en vis à vis que d'un élément d'assemblage qui lui est symétrique et donc raccordable.

On va maintenant procéder à une description plus détaillée de l'invention, en référence aux figures annexées, pour lesquelles :
- la figure 1 représente un pont triangulé linéaire classique muni des éléments d'assemblage terminaux selon la présente invention, vus en perspective,
- la figure 2 est une coupe de deux éléments d'assemblage emboîtés l'un dans l'autre, qui montre leur totale adéquation,
- la figure 3 représente une pièce d'angle en L, en vue de dessus,
- la figure 4 montre un assemblage plus complexe, faisant intervenir des ponts linéaires et des pièces d'angle, et illustrant l'immuabilité du positionnement des éléments d'assemblage par rapport à un tube, lorsqu'on suit un trajet matérialisé par ledit tube, le tout également représenté en vue de dessus.

Dans toutes ces figures, on a choisi une structure triangulée à trois tubes, mais cela ne constitue bien entendu qu'un exemple, et l'invention s'applique aussi bien à des structures à quatre tubes, voire plus, qu'à des éléments plans à deux tubes, ou monotubes si l'usage s'en fait sentir.

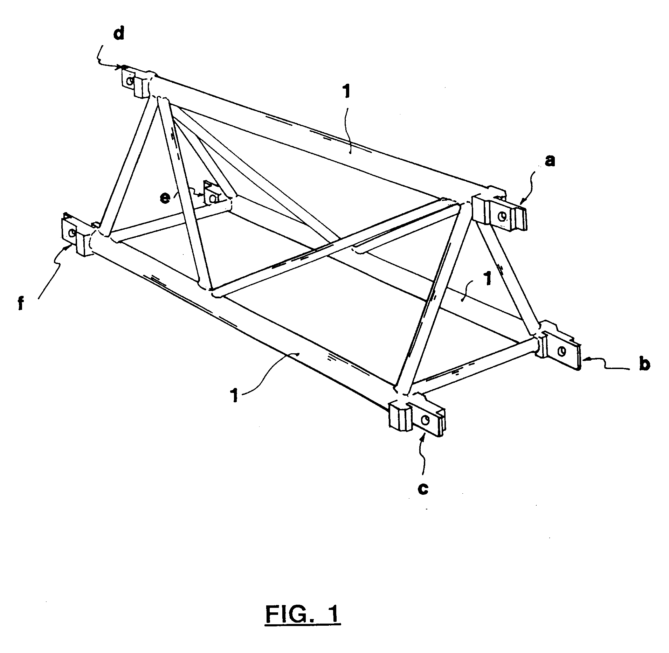

La figure 1 montre bien que les six éléments d'assemblage terminaux (a, b, c, d, e, f) sont parfaitement identiques, mais placés symétriquement selon qu'ils sont à l'une ou à l'autre des extrémités. Relativement au tube (1), leur position est strictement identique, que l'on prenne le tube dans un sens ou dans l'autre.

De la sorte, si l'on imagine une poutre triangulée identique, que l'on voudrait fixer bout à bout avec la première, on s'aperçoit que son extrémité gauche s'emboiterait parfaitement avec l'extrémité droite de celle qui est visualisée.

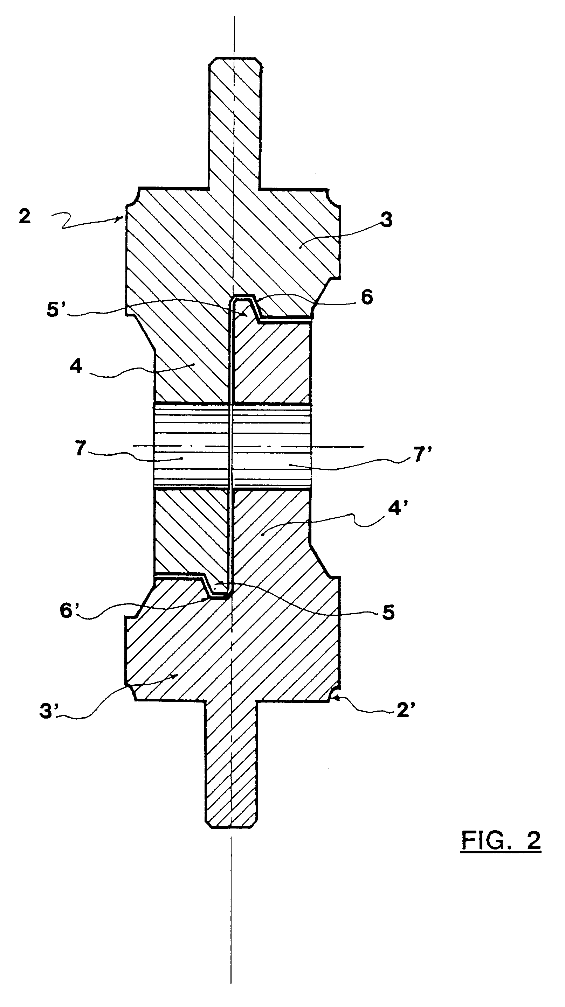

Cet emboîtement partait est représenté en figure 2, où apparaissent deux éléments d'assemblage en position raccordée (2) et (2'). Le premier volume d'allure prismatique (3) (3') est perpendiculaire à l'axe central du tube, et au second volume (4) (4'), lequel est en outre légèrement décalé par rapport audit axe. Le tenon (5) est inséré dans la mortaise (6'), dans laquelle il s'ajuste, et le tenon (5') est par conséquent ajusté dans la mortaise (6).

Dans cette position, les alésages (7) (7') sont coaxiaux, et on peut solidariser les deux éléments d'assemblage (2) et (2') par boulonnage ou au moyen d'une goupille (non représentés).

Bien entendu, si les positions relatives des éléments terminaux sont immuables relativement à un trajet tubulaire, il est tout à fait loisible de changer la convention de départ selon le trajet tubulaire. Ainsi, dans le pont triangulé de la figure 1, les deux trajets tubulaires de la base sont sous la même convention et les éléments d'assemblage (b) (c) d'une part, et (e) (f) d'autre part, sont placés identiquement relativement à leur tubulure. Il n'en est pas de même pour ce qui concerne le trajet tubulaire du sommet, pour lequel la convention inverse a été prise.

Cela permet de réaliser un meilleur emboîtement des ponts triangulés par autocentrage de l'un par rapport à l'autre.

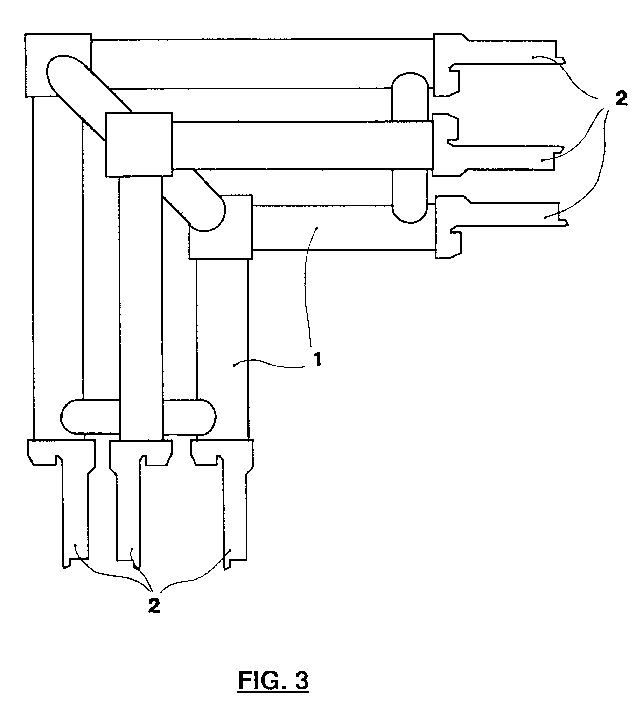

La figure 3 montre, en vue de dessus, une pièce en forme de L, à trois tubes placés triangulairement. En d'autres termes, cette pièce correspond au pont triangulé linéaire de la figure 1 et peut s'y adapter, puisque les mêmes conventions ont été respectées pour les tubes de la base et du sommet.

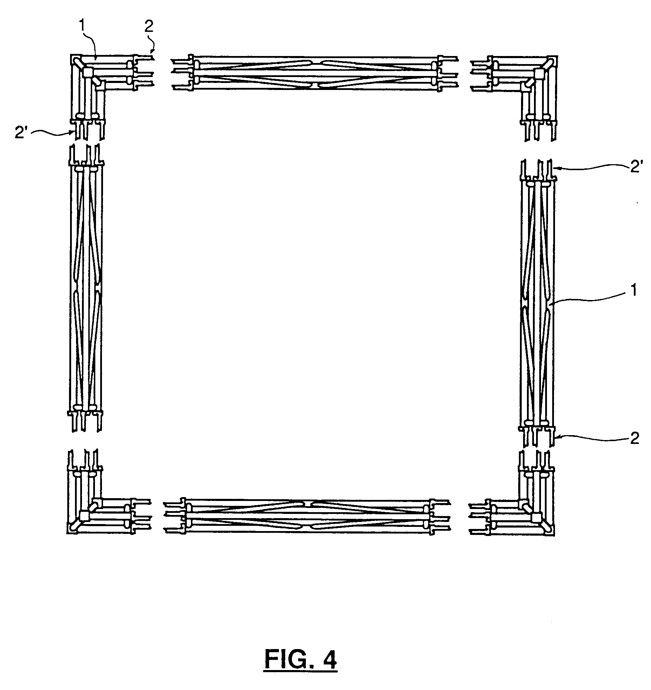

Enfin, en figure 4, on a voulu montrer un assemblage plus complet, également en vue de dessus, de façon à montrer l'immuabilité du placement des éléments terminaux lorsqu'on effectue un trajet tubulaire selon un mouvement rotatif. Cette figure est volontairement simplifiée à l'extrême, puisque seuls deux types d'éléments, une pièce en L et une pièce linéaire, sont utilisés. Mais cette configuration rend l'exemple d'autant plus frappant.

Du point de vue de la résistance des matériaux, les éléments d'assemblage travaillent surtout en flexion et en cisaillement. D'où la forme donnée, avec les tenons d'extrémité qui viennent en butée sur une face de la mortaise.

Des essais de traction ont été effectués, qui se sont soldés par une rupture à 45 000 N, mais dans la partie centrale du tube : les éléments d'assemblage selon l'invention n'ont pas souffert.

Bien entendu, les représentations figurées des éléments d'assemblage sont sujettes à des variantes : ainsi, il est possible de décaler les couples tenon / mortaise vers l'extérieur, alors que sur le système des figures 1 à 4, ils ont une face commune, va une surface plane du second volume d'allure prismatique (4) (4').

De même, on peut incliner cette surface plane, afin qu'elle ne soit plus perpendiculaire au premier volume d'allure prismatique (2) (3').

## Revendications

1. Elément d'assemblage unique standard destiné à équiper les extrémités de tubulures d'angle (1) de pièces en poutres triangulées destinées à être assemblées pour former des structures complexes, selon lequel la forme extérieure dudit élément d'assemblage terminal (2) est telle qu'elle peut s'ajuster au contact de son homologue identique (2') de la pièce avec laquelle le raccordement s'effectue, lequel homologue se présente symétriquement par rapport à ses axes longitudinal et transversal, par l'intermédiaire de liaisons à tenon (5) et mortaise (6), la mortaise (6) étant pratiquée dans un premier volume d'allure prismatique susceptible d'être rapporté centré sur la tubulure (1) et perpendiculairement à elle, et située à la base d'un second volume (4) d'allure également prismatique, perpendiculaire au premier et décalé par rapport à l'axe central de la tubulure (1), qui comporte à son extrémité le tenon (5) et est muni d'un moyen (7) permettant la solidarisation avec son homologue symétrique, caractérisé en ce que ledit second volume (4) présente une surface d'appui plane s'étendant transversalement par rapport au premier volume (3) et agencée de telle façon par rapport à la mortaise (6) et au tenon (5) qu'elle vienne au contact d'une surface d'appui plane correspondante dudit homologue (2') symétrique de façon à réaliser un emboîtement parfait.

2. Elément d'assemblage selon la revendication 1, caractérisé en ce que le moyen permettant la solidarisation avec son homologue symétrique consiste en un alésage (7) centré dans ladite surface d'appui plane du second volume (4) d'allure prismatique.

3. Pièces en poutre triangulées dont les tubulures d'angle (1) sont munies à leurs extrémités extérieures au niveau des endroits de raccordement d'éléments d'assemblage (2) selon la revendication 1 ou 2, selon lesquelles, quel que soit le nombre des extrémités d'assemblage, sur un trajet tubulaire donné, la position de chaque élément d'assemblage terminal (2) est strictement identique relativement à la tubulure (1).

## Claims

1. Standard single assembly element designed for fitting to the ends of angle tubes (1) of components formed from triangular beams designed to be assembled to form complex structures, according to which the external shape of the said end assembly element (2) is such that it is able to fit on contact with its identical homologue (2') on the component with which the connection is being effected, which homologue is symmetrical with respect to its longitudinal and transverse axes, through tenon (5) and mortice (6) joints, the mortice (6) being formed in a first prismatic volume which can be attached centred on the tube (1) and perpendicular to it, and situated at the base of a second, also prismatic, volume (4), perpendicular to the first and offset with respect to the central axis of the tube (1), which has at its end the tenon (5) and is provided with a means (7) allowing fixing to its symmetrical equivalent, characterised in that the said second volume (4) has a plane bearing surface extending transversely with respect to the first volume (3) and arranged in such a way with respect to the mortice (6) and tenon (5) that it comes into contact with a corresponding plane bearing surface on the said symmetrical homologue (2'), so as to produce a perfect fitting.

2. Assembly element according to Claim 1, characterised in that the means allowing fixing to its symmetrical homologue consists of a bore (7) centred in the said plane bearing surface of the second prismatic volume (4).

3. Triangular beam components, the angle tubes (1) of which are provided at their outer ends, at connection points, with assembly elements (2) according to Claim 1 or 2, according to which, whatever the number of assembly ends, on a given tubular path, the position of each end assembly element (2) is strictly identical relative to the tube (1).

## Patentansprüche

1. Genormtes Verbindungselement einer einzigen Bauform für die Anbringung an den Enden von Streben (1) von Teilstücken dreieckförmiger Strebenwerke, die dazu bestimmt sind, miteinander verbunden zu werden, um komplexe Anordnungen zu bilden, wobei die äußere Form des Endverbindungselements (2) derart ausgebildet ist, daß sie sich in Berührung mit ihrem identisch ausgebildeten Gegenstück (2') des Teilstücks, mit dem die Verbindung mittels eines Vorsprungs (5) und einer Aussparung (6) hergestellt wird, ausrichten kann, wobei das Gegenstück bezüglich seiner Längs- und seiner Querachse symmetrisch ausgebildet ist, wobei die Aussparung (6) in einem ersten prismatischen Bereich ausgebildet ist, der zentriert auf der Strebe (1) und senkrecht zu dieser anbringbar ist, und an der Basis eines gleichfalls prismatischen zweiten Bereichs (4) angeordnet ist, der senkrecht zu dem ersten Bereich und bezüglich der Mittelachse der Strebe (1) versetzt angeordnet ist und der an seinem Ende den Vorsprung (5) aufweist und über ein Mittel (7) verfügt, welches die Fixierung mit seinem symmetrischen Gegenstück erlaubt,
**dadurch gekennzeichnet**,
daß der zweite Bereich (4) eine ebene Stützfläche aufweist, die sich gegenüber dem ersten Bereich (3) quer erstreckt und bezüglich der Aussparung (6) und dem Vorsprung (5) so angeordnet ist, daß sie mit einer entsprechenden Stützfläche des symmetrischen Gegenstücks (2') in Berührung bringbar ist, so daß ein perfekter Eingriff erreichbar ist.

2. Verbindungselement nach Anspruch 1, dadurch gekennzeichnet, daß das die Fixierung mit dem symmetrischen Gegenstück erlaubende Mittel aus einer Öffnung (7) besteht, die zentriert in der ebenen Stützfläche des zweiten prismatisch ausgebildeten Bereichs (4) ausgebildet ist.

3. Dreieckförmiges Strebenwerk, dessen Streben (1) an ihren äußeren Enden auf dem Niveau der Verbindungsbereiche mit Verbindungselementen (2) nach Anspruch 1 oder 2 versehen sind, wobei unabhängig von der Anzahl der Verbindungselemente auf einer gegebenen Strebe die Position jedes Endverbindungselements (2) gegenüber der Strebe (1) genau identisch ist.
